(19) Europäisches Patentamt / European Patent Office / Office européen des brevets

(11) **EP 2 500 323 A1**

(12) **EUROPEAN PATENT APPLICATION**

(43) Date of publication:
**19.09.2012 Bulletin 2012/38**

(51) Int Cl.:
*C02F 1/72* (2006.01)     *C02F 101/30* (2006.01)

(21) Application number: **11425062.4**

(22) Date of filing: **14.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **E' COSI' S.R.L.**
**47100 Forli' (FO) (IT)**

(72) Inventor: **Fornasari, Davide**
**47122 Forli' (IT)**

(74) Representative: **Modiano, Micaela Nadia et al**
**Modiano & Partners (IT)**
**Via Meravigli, 16**
**20123 Milano (IT)**

(54) **Method for the degradation of industrial wastewater and apparatus for performing the method**

(57)     A method for the degradation of industrial wastewater, which provides, in a first step a., sending a predefined quantity of wastewater to an apparatus (1) provided with a respective containment tank (2); then, in a second step b., the method consists in administering to the predefined quantity of wastewater a first additive for adjusting the pH value, in order to bring it to a first predefined value. Upon reaching the first predefined pH value, in a step c. hydrogen peroxide and an iron salt are added to the predefined quantity of wastewater, in order to induce the forming of hydroxyl radicals, suitable for the advanced oxidation of substances of various types present in the predefined quantity of wastewater, for an at least partial first degradation thereof. Then, in a step d., the method according to the invention provides for adding to the predefined quantity of wastewater a second additive for adjusting the pH value, in order to bring it to a second predefined value, adapted to facilitate the spontaneous decomposition of the residual hydrogen peroxide and the precipitation of iron hydroxides, for a second degradation of the remaining substances of various types present in the predefined quantity of wastewater; finally, in a step e., the containment tank (2) is evacuated, for the final disposal of the predefined quantity of wastewater, substantially degraded.

SENDING WASTEWATER — a

FIRST FILTRATION — f

FIRST ADDITIVE ADMINISTRATION — b

ADDITION OF HYDROGEN PEROXIDE AND IRON SALT — c

DEGRADATION — c1

ADDITION OF SECOND ADDITIVE — d

SECOND FILTRATION — g

EVACUATION — e

COLLECTING DEGRADED WASTEWATER — h

*Fig.1*

EP 2 500 323 A1

**Description**

The present invention relates to a method for the degradation of industrial wastewater and to an apparatus for performing the method.

Currently, the need is increasingly felt to wash regularly and effectively industrial surfaces, such as those of industrial buildings, but also of stations, shopping centers, public buildings or more generally of any building in which production activities occur or goods or services are offered.

For this purpose, detergents of various types are often used which have, in their composition, chemical substances with a. high polluting content, such as surfactants (organic molecules responsible for the removal of dirt).

There is, therefore, the need to manage the wastewater obtained by washing, and this is typically achieved by means of their disposal into the public sewer systems, after degrading said wastewater, in order to reduce the content of surfactants (as observed, that originate from the detergent itself) and/or of the organic and inorganic substances dissolved therein (constituted substantially by dirt of different types removed by washing).

The degradation is in fact imposed by the laws currently in force, because the civil purification plants arranged downstream of public sewer systems usually use bacterial microorganisms, which are unsuitable to degrade the content of the wastewater described above.

It is also useful to note, furthermore, that the problems described in the previous paragraphs are also felt in the field of other commercial activities, such as for example those of laundries or car washes that have to dispose of large quantities of water mixed with detergents and impurities/dirt of various types.

According to a first known method, therefore, the degradation of the wastewater occurs by adsorption on activated carbon, which due to its porous structure is capable of retaining on its surface most of the organic substances present in the washing water. Activated carbon, however, is not equally effective toward all types of organic substance (non-polar substances, for example, are generally not retained); in addition, the performance of the activated carbon is subjected to rapid decay over time due to pore saturation; it is thus necessary to proceed with periodic regenerations by means of expensive methods and/or with their disposal and replacement (with further costs). Moreover, it should be noted that the capacity to retain organic contaminants is affected by a very large number of parameters and thus the use of this type of treatment imposes constant monitoring, which is obviously onerous, of the progress of the process.

According to a second method of degradation, the wastewater is forced to pass through a sand bed (or another solid impermeable medium) constituted by superimposed layers of particles of different size, in order to filter the wastewater and thus remove the suspended solids contained in the fluid. Along the surface of the filtering medium, moreover, a biological film is formed which traps the small particles present in the water and degrades the organic material. The progressive clogging of the filter bed, however, requires periodic cleaning operations, performed by means of backwashing operations with running water, with a consequent enormous expenditure of resources.

Moreover, in order to ensure the effectiveness of the degradation also for wastewater with high turbidity, toward which filtration shows many limitations, it is necessary to associate this last method with the action of substances known as flocculants, capable of inducing processes of aggregation of the suspended solids that lead to the forming of flocks of sludge that tend to precipitate by gravity toward the bottom of the tank. The sludge is then collected, stored and disposed, achieving the intended purpose, but with further costs due to such additional processing steps.

It is useful to specify, furthermore, that after performing the filtration steps proposed above there is often a further biological treatment with activated sludge, in order to degrade the residual organic substances that had not been eliminated by the previous treatments, thus further increasing the overall costs linked to the treatment.

It is therefore evident that known methods suffer many drawbacks that limit their effectiveness, because none of them acts on all types of pollutants and if considered individually they do not ensure, therefore, such a reduction of pollutant loads as to make the wastewater fall within legal limits; moreover, they involve excessively high execution, maintenance and monitoring costs (besides the costs for providing the plant).

The aim of the present invention is to solve the problems described above by proposing a method capable of degrading washing wastewater effectively with modest costs.

Within this aim, an object of the invention is to propose a method that ensures degradation of washing wastewater without requiring the installation of complex equipment.

Another object of the invention is to propose a method that is highly effective in the reduction of pollutant loads of any type, in order to allow their subsequent discharge into sewer systems and/or their management in a practical and easy manner.

Another object of the invention is to propose a method that can be performed in a short time.

Another object of the invention is to provide an apparatus that allowsthe degradation of industrial wastewater in a simple and economic manner, without requiring complex maintenance and monitoring activities.

Another object of the invention is to provide an apparatus that ensures high reliability in operation.

Another object of the invention is to provide an apparatus that can be obtained easily starting from commonly commercially available elements and materials.

This aim and these objects are achieved by a method for the degradation of industrial wastewater, which consists in sending a predefined quantity of wastewater to an apparatus provided with a corresponding containment tank; in administering to said predefined quantity of wastewater a first additive for adjusting the pH value, so as to bring it to a first predefined value; in adding to said predefined quantity of wastewater, once said first predefined value of pH has been reached, hydrogen peroxide and an iron salt, in order to induce the forming of hydroxyl radicals, suitable for the advanced oxidation of substances of various types present in said predefined quantity of wastewater, for an at least partial first degradation thereof; in adding to said predefined quantity of wastewater a second additive for adjusting the pH value, so as to bring it to a second predefined value, adapted to facilitate the spontaneous decomposition of the residual hydrogen peroxide and the precipitation of iron hydroxides, for a second degradation of the remaining substances of various types present in said predefined quantity of wastewater; in evacuating said containment tank, for the final disposal of said predefined quantity of wastewater, substantially degraded.

Further characteristics and advantages of the invention will become better apparent from the following detailed description of a preferred but not exclusive embodiment of the method according to the invention, illustrated by way of non-limiting example in the accompanying drawings, wherein:

Figure 1 is a flowchart of the method for the degradation of wastewater according to the invention;
Figure 2 is a schematic side elevation view of a first embodiment of the apparatus for performing the method according to the invention;
Figure 3 is a schematic side elevation view of a second embodiment of the apparatus for performing the method according to the invention;

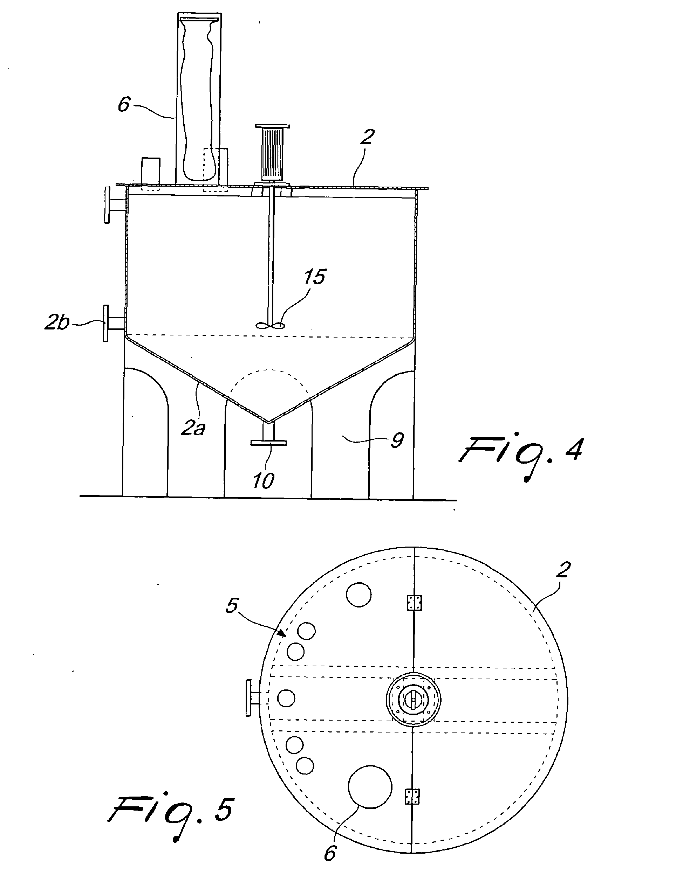

Figure 4 is a side elevation view of a first component of the apparatus in Figure 3;
Figure 5 is a top view of the first component of Figure 4;

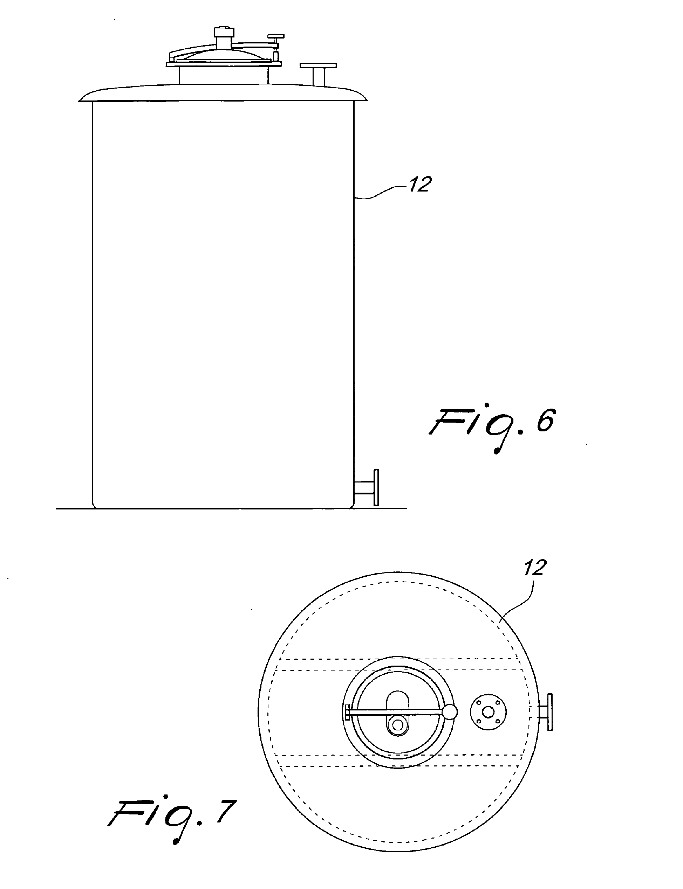

Figure 6 is a side elevation view of a second component of the apparatus of Figure 3;
Figure 7 is a top view of the second component of Figure 6;

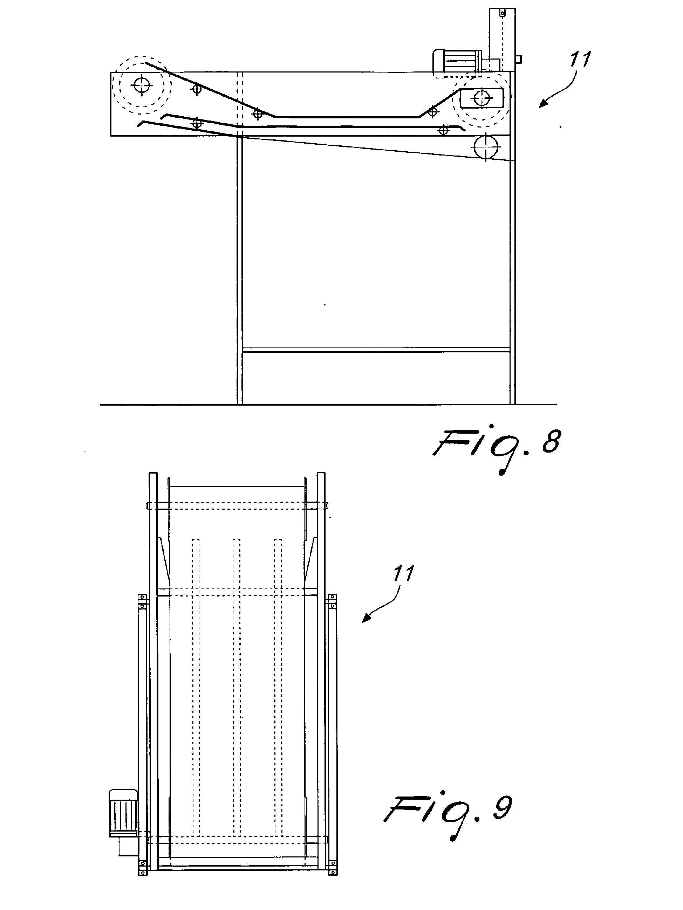

Figure 8 is a side elevation view of a third component of the apparatus of Figure 3;
Figure 9 is a top view of the third component of Figure 8;
Figure 10 is a chart that illustrates the results of some experiments in relation to particular embodiments of the method according to the invention;
Figure 11 is a calibration chart used for performing experimental tests aimed at checking the effectiveness of the method according to the invention;
Figure 12 is a table that reports the results of further experimental tests aimed at checking the effectiveness of the method according to the invention.

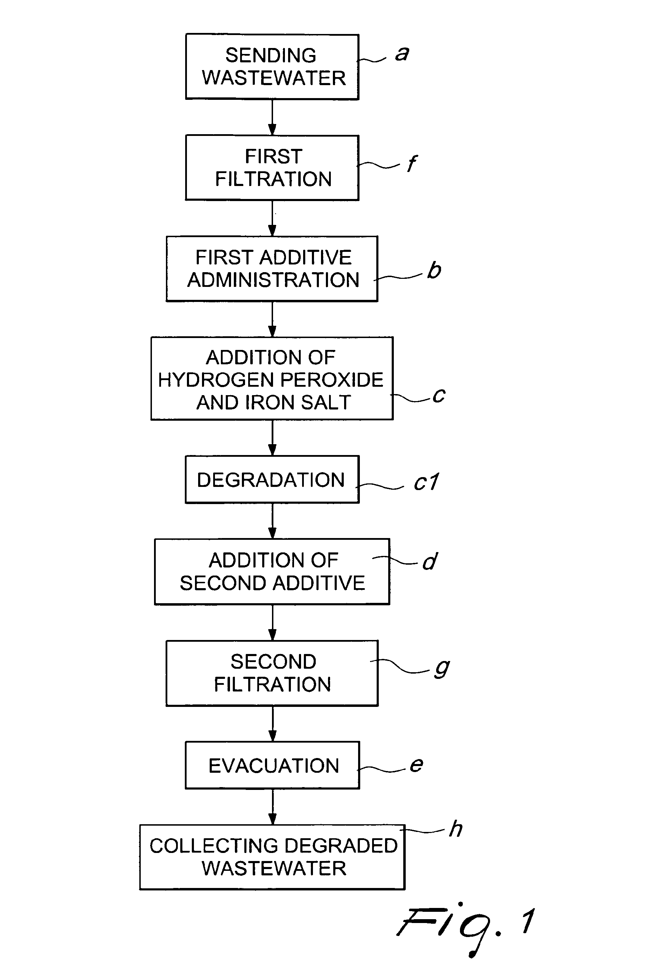

With reference to the figures, the method according to the invention (shown schematically in Figure 1 in a possible embodiment) is particularly suitable for the treatment of industrial wastewater, such as wastewater from washing activities (for example with combined washing-drying machines A, with liquid aspiration devices or others) of industrial surfaces (of industrial buildings, for example, or more generally of any public or private building in which production activities are performed or goods or services are offered).

The degradation of this type of wastewater therefore constitutes the preferred application of the method according to the invention and will be referenced constantly hereinafter in the present description.

In greater detail, the preferred application consists in the degradation of wastewater that has, in various concentrations, surfactants (as observed, that derive from the detergent itself) and/or organic and inorganic substances dissolved therein (constituted substantially by dirt of different types removed by washing).

However, it should be noted that the method according to the invention can be used also for degrading wastewater obtained by washing industrial surfaces (and not only), without resorting to detergents. As verified by the Applicant, in fact, who has performed tests on the floor of its own plant by washing it with water alone, the concentration of pollutants is in any case very high even in such wastewater without detergents (COD equal to 2.650 mg/l, where the meaning of COD, and the methods for measuring it, will be described in the pages that follow).

Moreover, the possibility is not excluded, and is within the scope of the protection claimed herein, to use the method according to the invention for the degradation of substances and/or wastewater of different types, if allowed and/or made preferable by the specific requirements. For example, the possibility is provided to resort to the method according to the invention for the degradation of wastewater that originates from the activities of commercial establishments such as laundries, canteens and other buildings intended for public catering and/or for food use, car washing systems as well as nursing homes and public or private health-care environments.

Moreover, it is specified that the method according to the invention can be used effectively for the degradation of wastewater originating not only from washing activities but also from other treatments or manual interventions, such as for example wax removal.

According to the invention, the method for the degradation of industrial wastewater consists, in a first step a.,

in sending a predefined quantity of wastewater to an apparatus 1 provided with a respective containment tank 2.

Subsequently, the method entails, in a step b., administering to this predefined quantity of wastewater a first additive for adjusting the pH value, so as to bring it to a first predefined value, such to allow optimum execution of the subsequent steps.

In particular, according to a first embodiment of the method according to the invention, the first additive comprises a mixture of caustic soda and sulfuric acid (but different mixtures or elements might also be used, for example by resorting to lime instead of caustic soda) and may be used in order to bring the wastewater to a first predefined pH value comprised between 3 and 5, and preferably equal to 4.

Once the first predefined pH value has been reached, in a step c., the addition of hydrogen peroxide and an iron salt to the predefined quantity of wastewater is provided, in order to induce the forming of hydroxyl radicals (and/or other radical species) through a reaction known as "Fenton reaction" (or "Fenton process"). These radicals are in turn capable of performing the advanced oxidation of substances of various types present in the predefined quantity of wastewater and thus of performing an at least partial first degradation thereof (with consequent at least partial removal of the organic substances contained in them).

As is known, advanced oxidation is a particular process of chemical oxidation that occurs at room temperature and atmospheric pressure (and thus in conditions that are easy to provide, without requiring particular support infrastructures), and leads to the forming of the hydroxyl radicals cited above, which are extremely reactive, have oxidation potential and have the tendency to attack most organic substances: this low selectivity is thus indeed extremely advantageous, because it ensures the effectiveness of the method according to the invention against the various types of pollutants present in wastewater.

According to an embodiment of relevant practical interest, cited by way of non-limiting example, the hydrogen peroxide is 50% diluted in distilled water, this percentage being referred to the total weight, and step c. consists in adding hydrogen peroxide which is diluted in a quantity comprised between 1 ml and 10 ml for every 100 ml of treated wastewater, and preferably in a quantity comprised between 1 ml and 5 ml (and for example precisely equal to 1.2 or 5 ml) for every 100 ml of treated wastewater (but the use of different concentrations, also as a function of the specific application and of the type of wastewater to be treated, is not excluded).

With further reference to the preferred but not exclusive embodiment, the iron salt is chosen among iron sulfate, ferrous chloride and iron hydroxide and preferably consists in iron sulfate.

According to this last embodiment, step c. thus consists in adding iron sulfate in a quantity comprised between 0.1 g and 5 g, for every 100 ml of treated wastewater, and preferably in a quantity equal to 0.7 g for every 100 ml of treated wastewater.

Positively, there is the possibility to perform, after the addition step c., a further treatment c1 of degradation of the predefined quantity of wastewater, in order to further reduce the initial organic load and in general the content of pollutants. In this regard, mention is made, merely by way of non-limiting example, of the possibility that this further treatment (to be performed optionally even before or simultaneously with step c.) is chosen among: a further addition step c., in the manner already described, the use of hydrogen peroxide alone, an ozonization treatment or low-frequency ultrasonic treatment, a treatment based on ultraviolet radiation, or a combination of two or more of the above.

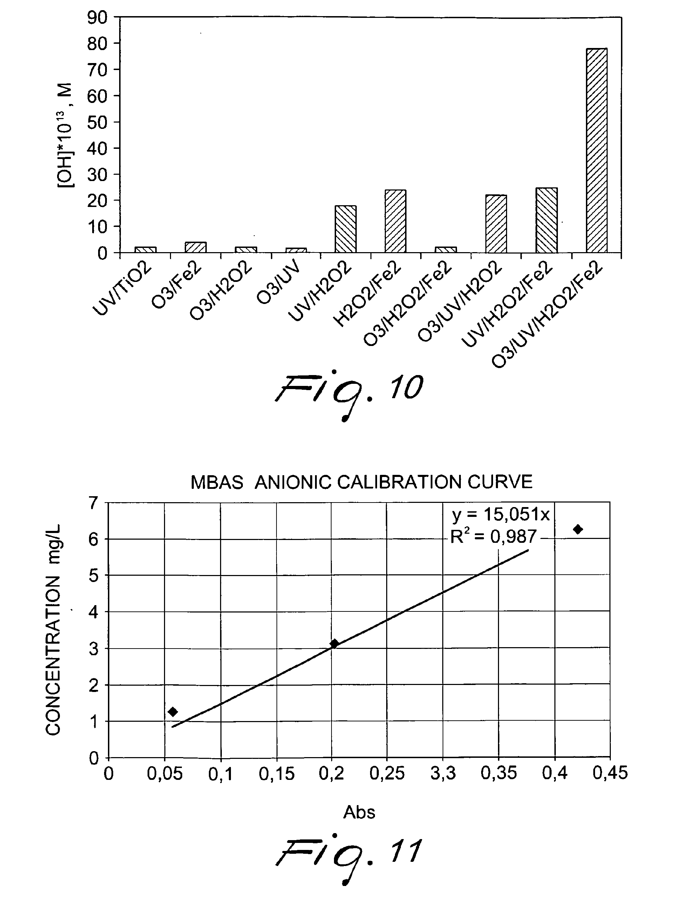

In this regard, Figure 10 is a table that shows the result of some tests performed by the Applicant regarding the effectiveness of the combination of two or more treatments (and in particular of the combination of ultraviolet radiation in step c. and ozonization).

At the end of the cited addition step c., the method contemplates, in a step d., the addition to the predefined quantity of wastewater of a second additive for adjusting the pH value, capable to bring it to a second predefined value, suitable to facilitate the spontaneous decomposition of the residual hydrogen peroxide and the precipitation of iron hydroxides, for a second degradation of the remaining substances of various types present in the predefined quantity of wastewater.

In particular, according to a possible embodiment of the method according to the invention (cited by way of non-limiting example of the application of the invention), the second additive is substantially constituted by caustic soda (but, as for the first additive, it is possible to use lime or others) and may be used to bring the pH of the wastewater contained in the containment tank 2 to a second predefined value comprised between 8 and 9.

In this manner one observes, as indicated in the previous paragraphs, the precipitation of iron hydroxides while the residual hydrogen peroxide decomposes due to its instability in neutral or alkaline pH conditions. The decomposition of the hydrogen peroxide causes a further degradation of the organic substances present in the wastewater; at the same time, the iron hydroxides, thanks to their flock-like structure, which inherently traps part of the organic substances present in the wastewater in colloidal form, also ensure a reduction in the organic load of the treated wastewater.

At the end of the addition step d. described above, the method according to the invention provides, in a step e., the evacuation of the containment tank 2, in order to allow the final disposal of the predefined quantity of wastewater, which by now is substantially degraded.

Usefully, the method according to the invention contemplates, after the sending step a. and before the administering step b. described above, a step f. of first coarse filtration of the predefined quantity of wastewater, in order to remove at least partially any coarse materials that might be present in suspension in it.

Conveniently, the method according to the invention has, moreover, after the addition step d. and before the evacuation step e., a step g. of second fine filtration of the predefined quantity of wastewater, in order to remove any solid materials that might have formed in the containment tank 2 during the previous steps of the method.

Especially during the addition step d., in fact, the precipitation of iron hydroxides may determine the production of even relevant quantities of iron sludge, which thus may be disposed during the step g. proposed above (according to various methods, some of which will be proposed in the continuation of the present description).

However, it is useful to specify that after providing the separation of the sludge and/or other solid-state materials, it is possible to dehydrate the latter by vacuum filtration and subsequently to dry them in a stove (for example at 105°C for 3-4 hours) and finally to bake them in a muffle furnace (at temperatures, for example, of 300-400°C for 10-60 minutes) and then cool them. The solid residues thus obtained can advantageously be reused (after they have been dissolved in sulfuric acid) as ferrous catalysts.

The above possibility to reuse ferrous sludge is of considerable interest, since it allows the considerable reduction in the quantity of sludge that otherwise would have to be handled as waste with possibly high disposal costs.

According to a first embodiment of the method according to the invention, the evacuation step e. entails the discharge of the wastewater by now degraded into the sewer network, because thanks to the effectiveness of the solution proposed in the previous pages, the pollutant load can be brought below the limits provided for by the statutory provisions indeed for discharge into the sewer system.

Advantageously, according to a different embodiment of the method according to the invention, after the evacuation step e. it is possible to provide a step h. for collecting the substantially degraded wastewater, so as to allow its reuse in the industrial field (for example, but not exclusively, for a subsequent washing operation, which is substantially identical to the one with which the wastewater treated with the method itself was obtained). Such option is feasible both when the pollutant load has been decreased below the limits provided by statutory provisions to allow discharge into the sewer system, and if the load has remained above these values (for example in the case of wastewater that is particularly rich in pollutants). Reuse, as is evident, also allows considerable savings, since it reduces (or eliminates) the consumption of mains water for activities for which high water purity is not required: water that has a modest load of pollutants (as a substitute for mains water) may in fact be reused for example for car washing (in industrial car washes) or industrial machines/equipment, for floor washing, etcetera.

According to the invention the apparatus 1 for performing the method described in the previous paragraphs comprises at least one supply duct 3, which leads to the containment tank 2, and a first pump 4, which is associated with the duct 3 and is designed to send the industrial wastewater to be degraded to the containment tank 2.

The first pump 4 may be of the electric membrane pump type and may be provided with a suction pipe 4a and a discharge pipe 4b (which leads directly to the supply duct 3): with specific reference to the wastewater that originates from the washing of industrial surfaces, by means of washing-drying machines A provided with a water containment vessel B, the first pump 4 makes it possible to overcome any differences in level between the discharge of the vessel B and the containment tank 2.

The containment tank 2 is furthermore provided with controlled delivery means 5 capable of introducing in the containment tank 2 the first pH adjustment additive, the hydrogen peroxide and the iron salt (in order to induce the forming of hydroxyl radicals), and the second pH adjustment additive.

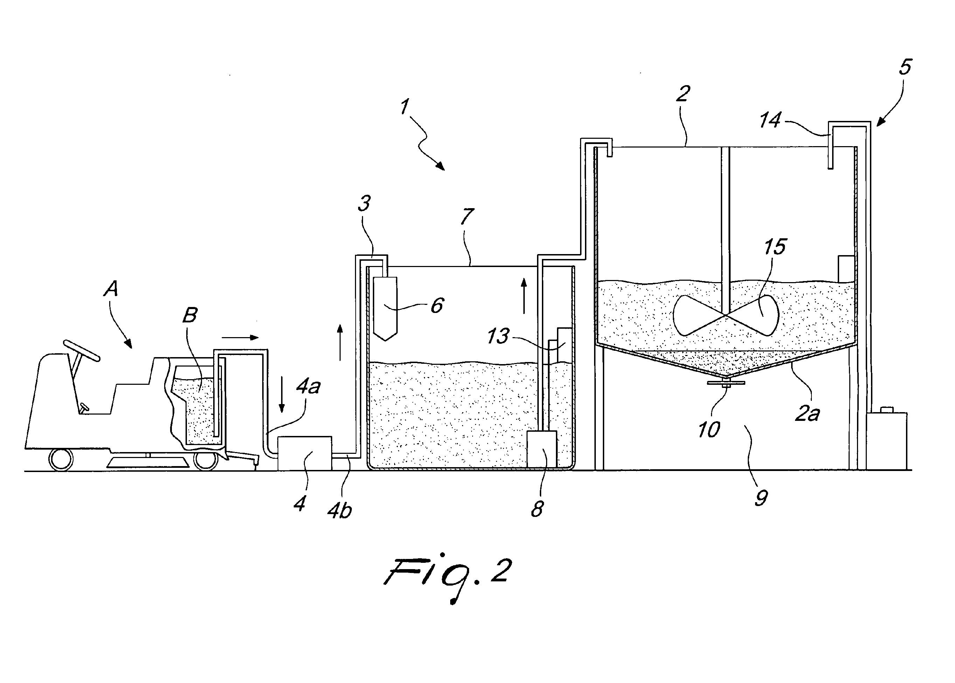

Usefully, the apparatus 1 comprises a first filter 6 for the wastewater, which preferably is of the bag filter type with porosity comprised between 25 μm and 50 μm and is arranged along the supply duct 3 (for example at its end mouth, as in Figure 2), so as to control the passage of the wastewater (for example drawn from the containment vessel B of the washing-drying machine A) and perform the step f. of first coarse filtration.

It is useful to note that the possibility is provided (and shown in Figure 2) for the apparatus 1 to comprise an additional storage tank 7 capable of receiving and storing the wastewater that arrives from the duct 3 until the predefined quantity to be degraded by means of the method according to the invention has been reached.

Upon reaching this predefined quantity, in fact, a second pump 8 can be actuated which sends the wastewater to the containment tank 2 in which the various steps of the method occur.

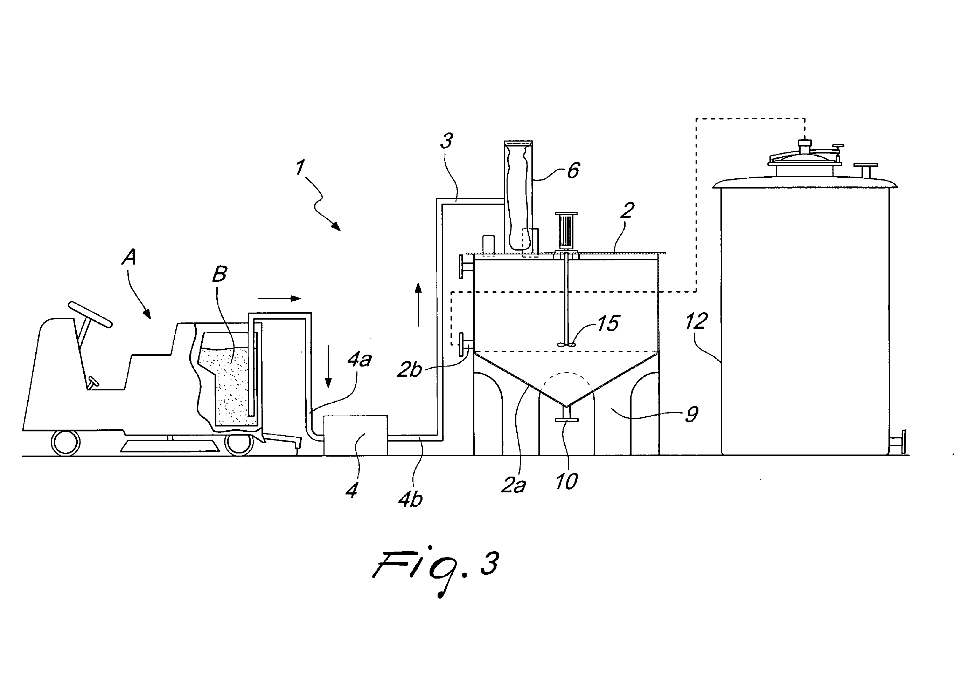

According to the alternative of Figure 3, instead, the containment tank 2 receives, by the first pump 4, the wastewater directly from the washing-drying machines A, after the step f. of first coarse filtration has been performed by the first filter 6.

Moreover, it is specified that the apparatus 1 might be provided with a further third filter, arranged upstream of the first pump 4 for a prefiltration of the wastewater, aimed at eliminating the residues and large dirt (stones, cigarette ends, etcetera) that otherwise might block the first pump 4 or in any case lead to its malfunction.

Conveniently, according to a first embodiment of the apparatus 1, substantially shown in Figure 2, the apparatus 1 itself comprises a second filter for the wastewater, preferably of the filter press type, even a traditional one, which is arranged in a chamber 9 provided substantially below the containment tank 2 and connected thereto, for example by means of a discharge valve 10, and capable of thus performing the step g. of second fine filtration of the predefined quantity of wastewater (at this point at least partially degraded).

In particular, the filter press may comprise a rotating roller (typically made of porous fabric cloth) arranged in the chamber 9: when the discharge valve 10 opens, the sludge starts to fall onto the roller and from there is entrained toward the ends, where a blade is provided which, by scraping the surface of the cloth, allows separation of the sludge from the treated water. The sludge is then collected to the side of the filter press, while the clean water passes through the cloth and is collected in the lower part of the containment tank 2.

It should be noted, furthermore, that thanks to this solution the collected sludge has a reduced volume (because a lot of the water contained in it is lost during the process) and this simplifies its subsequent management (and/or disposal).

According to the different constructive solution proposed in Figure 3, the apparatus comprises a second filter for the wastewater, preferably of the type of a paper roll filter 11, even of a known type and arranged downstream the chamber 9, which in turn is provided substantially below the containment tank 2 and is connected thereto, in order to perform the step g. of second fine filtration of the predefined quantity of wastewater collected on the bottom 2a of the containment tank 2.

In greater detail, Figure 3 shows how the partially degraded wastewater (rich in sludge) settles on the bottom 2a of the tank 2, which is funnel-shaped. The funnel-like shape makes it possible, by gravity, to collect on the bottom wastewater that is partially degraded and rich in sludge, while in the upward region (proximately to the free surface of the liquid) the water is already completely degraded and sludge-free. Thanks to a discharge manifold 2b (preferably and conveniently arranged at a height that substantially corresponds to the upper rim of the bottom 2a), it is thus possible to evacuate the wastewater that has already been completely degraded while the wastewater collected on the bottom, rich in sludge, undergo the second filtration step g.

In particular, as mentioned, according to this solution the last step g. entails forcing the passage of the wastewater rich in sludge through a roll filter 11 (typically but not exclusively made of paper) with a porosity preferably comprised between 0.5 $\mu$m and 15 $\mu$m and kept constantly moving; such roll filter 11 may be furthermore provided with a sensor capable of detecting the quantity of liquid inside it, in order to detect its excessive filling.

It is specified that there is also the possibility to perform the second fine filtration step g. simply by merely expelling the sludge from the discharge valve 10, after waiting for it to compact: once the collection of the sludge (which can be observed by verifying the substantial clearness of the residual liquids) has been completed, the liquids may be sent again to a filtering device, such as a traditional cartridge filter.

According to a further embodiment, the second filter may be provided by means of membranes made of cellulose (with porosity for example comprised between 0.1 $\mu$m and 1 $\mu$m and preferably equal to 0.45 $\mu$m), which act by providing a substantial pneumatic vacuum by Venturi effect: the wastewater is aspirated due to the difference in pressure between the outside and the inside and filters through the porosity of the membrane, where the suspended particles are retained, thus obtaining an optimum solid-liquid separation.

As an alternative, the second filter may be of the pleated cartridge filter type, of the commercial kind, made of propylene material and with porosity for example comprised between 0.1 $\mu$m and 1 $\mu$m and preferably equal to 0.6 $\mu$m.

Moreover, step g. of second fine filtration might also be performed by reverse osmosis systems (or such systems may be placed alongside the proposed devices for optimum yield of the second filtration process).

As already noted, the method according to the invention may have a step h. for collecting the already degraded wastewater in order to reuse it in the industrial field: for this purpose, the apparatus 1 may positively comprise a container for collecting any solid-state materials that might have formed in the containment tank 2 (as described in the previous pages) and separated from the wastewater during step g. of second fine filtration.

In the meantime, the chamber 9 may lead to a further collection tank 12 of substantially degraded wastewater without the solid-state materials, indeed to perform the collection step h. and thus allow its reuse in the industrial field. The discharge manifold 2b may also be connected to the collection tank 12, particularly with reference to Figure 3, in order to also collect the already degraded wastewater that is not filtered though the second filter, as shown in the previous paragraphs. In order to send the wastewater to the collection tank 12, it is possible for example to resort to a third pump, which is appropriately provided in the apparatus 1 according to the invention.

Operation of the apparatus 1 according to the invention is thus as follows.

With reference (by way of non-limiting example) to the need to degrade wastewater that derives from washing floors and other industrial surfaces, the operator assigned to the use of the washing-drying machine A may discharge the containment vessel B (in which the wastewater is collected) into the containment tank 2 or into the storage tank 7 by means of the first pump 4.

As observed, the wastewater, along the path toward the storage tank 7, is affected by the first filter 6, preferably of the bag filter type, which thus performs a first coarse filtration, retaining some suspended impurities that might be present.

At the end of each treatment it is possible to perform maintenance of the first filter 6, which can occur (in a practical manner that can be easily repeated) by disassembling the filter and by washing it with backwashing with a pressurized water jet, in order to remove the solid particles retained during filtration.

The wastewater is collected in the storage tank 7, if provided, until a predefined quantity is reached which can be detected for example by a float 13, which actuates the second pump 8, which sends the wastewater to the containment tank 2.

In the containment tank 2, a probe capable of measuring the pH value drives the controlled dispensing means 5, and in particular, may for example actuate a dosage tube 14, which introduces in the containment tank 2 the first pH adjustment additive, the hydrogen peroxide, the iron salt, and the second pH adjustment additive, in order to perform the various steps of the degradation method according to the invention.

It is specified that there is the possibility to provide the apparatus 1 with a timer (or similar instrument) connected to a control unit to allow the setting of the duration of the various steps, which as an alternative can be decided manually, during the execution of the method itself.

Moreover, it is not excluded to provide apparatuses 1 provided with a mechanical agitator 15, even of a known type, in order to facilitate the stirring of the wastewater and thus a better distribution of the reagents, as well as a higher oxygenation of the wastewater (which in turn contributes to an optimum reduction of the pollutant load). The agitator 15 preferably will have to remain inactive at the production of sludge, in order to allow the fall of the sludge toward the bottom of the containment tank 2.

According to an alternative embodiment of the method, if the apparatus 1 is not provided with the probe illustrated above, an operator can monitor the development of the method (and the pH value) by means of litmus paper; in addition, the operator may directly introduce manually into the containment tank 2 the described reagents, if it is decided for the specific application requirements not to provide the apparatus 1 with the means 5 .

It is specified that an operator may also be assigned the task of verifying visually the end of step c. for adding hydrogen peroxide and an iron salt (for example, the operator might consider this step c. finished only when he will stop observing the forming of bubbles on the surface, a phenomenon which instead typically accompanies the reaction described above).

Moreover, the use is not excluded of sensors of various types, in addition to the already mentioned timer, aimed at monitoring parameters such as the temperature (which tends to increase initially, during step c., and then stabilizes and decreases gradually at the end of the oxidation reaction) and/or the concentration of hydrogen peroxide (which tends to decrease progressively). These sensors may be associated with the control unit: the control unit, which is conveniently preset, can drive the development of the various steps (and thus the introduction of the reagents in succession) as a function of predefined times and/or of the combination of the data detected by the probes.

Usefully, and with particular reference to step d. for adding the second adjustment additive, small quantities of flocculant and/or polyelectrolytic substances might also be introduced in the containment tank 2; for example, it is possible to introduce, even manually, small quantities of aluminum polychloride.

The method according to the invention, as well as the apparatus 1, thus make it possible to achieve the intended aim and objects, since the use of hydrogen peroxide and iron salts, in order to generate radicals suitable for the oxidation of the pollutants, is particularly effective for the quick and practical degradation of wastewater, with a modest consumption of water and at room temperature and atmospheric pressure, without requiring large infrastructures or high investment/operating costs.

The radicals in fact have a very high oxidation potential and the tendency to attack most organic substances: this low selectivity is thus extremely advantageous, since it ensures the effectiveness of the method according to the invention against the various types of pollutants that are present in the wastewater.

Moreover, the adjustment of the pH to the first predefined value and to the second predefined value ensure that the reaction occurs in optimum conditions and, in the case of the addition step d., facilitate the spontaneous decomposition of the residual hydrogen peroxide and the precipitation of iron hydroxides, for a second degradation of the remaining substances of various types, with a further reduction of the pollutant load.

In addition, it is noted that further advantages of the reaction for forming radicals by means of hydrogen peroxide and iron sulfate (or other iron salt) consist in the very low cost of the reagents involved and by the fact that the residual reagents, at the end of the reactions, do not constitute a threat to the environment.

In order to highlight the effectiveness of the degradation method illustrated in the previous pages and thus confirm what has been described in the previous paragraphs, the result of some tests performed by the Applicant is reported hereafter.

Fist of all, the Applicant has carried out some experimental tests with self-produced detergent solutions used to wash industrial surfaces of plants in the vicinity.

In greater detail, the detergent used (a concentrated floor detergent commercially known as "LUCE") has a quantity comprised between 5% and 10% of non-ionic and anionic surfactants, EDTA, <1% ammonia, fragrance.

A first chosen parameter, in order to check the actual reduction of the pollutant load, is COD: as is known, the abbreviation COD stands for chemical oxygen demand and its value, expressed in milligrams of oxygen per liter, represents the quantity of oxygen required for the complete oxidation of the organic and inorganic compounds present in a sample of water. It represents, therefore, an index that measures the degree of pollution of the water by oxidizable substances, mainly organic ones.

In accordance with the relevant Italian laws, D. Lgs. no. 152/2006, the COD of a sample of wastewater must be lower than 160 mg/l to allow it to be discharged into surface water, and must be lower than 500 mg/l to allow the discharge into the sewer network.

The measurement of COD is described by official method IRSA-CNR number 5130; the method entails the oxidation of the organic and inorganic substances that are present in a sample of water by means of a solution of potassium dichromate in the presence of concentrated sulfuric acid and of silver sulfate, as a catalyst of the oxidation. The excess dichromate is titered with a solution of ammonium and iron sulfate (II), the normality of which must be checked each time because it tends to decay; for this reason, during the performed measurements, instead of using a continuous check of this parameter, the choice has been made to proceed always with the production of the titered solution, but in a smaller quantity in order to avoid an excessive waste of reagents.

The concentration of the oxidizable organic and inorganic substances, in the conditions of the method, is proportional to the quantity of potassium dichromate consumed. The chloride ion is considered an interference, because its oxidation can occur only in the conditions of the method used for the COD and not in those present in natural wastewater. Such interference is eliminated by adding mercury sulfate.

In parallel, it is always necessary to perform a blank test (simple distilled water), proceeding in the same manner (only the normalities of the solutions used as reagents change).

The equipment required is as follows:

- 250-ml erlenmeyer flasks (cone connection 26);
- Liebig condenser or equivalent (height 300 mm, cone connection 26);
- distillation union (cone connections 26);
- heating plate;
- glass beads;
- 25-ml burettes, with 1/20-ml division;
- calibrated 20-ml pipette;
- 50-ml and 100-ml graduated cylinders.

The formula to calculate COD is as follows:

$$\text{COD (mg O}_2\text{/l)} = (b-a) * N \text{ red} * 400 * (\text{dilution, if any})$$

where:

    a = ml of standard solution of ammonium and iron sulfate (II) used in the titration of the sample;
    b = ml of standard solution of ammonium and iron sulfate (II) used in the titration of the blank test;
    N red = normality of the solution of ammonium and iron sulfate (II).

The following table lists the results of performing on various 100-ml samples (collected after the washing of a first industrial surface) the method according to the invention (and making the oxidation reactions occur for 24 hours), using 1 ml of 50% hydrogen peroxide and 0.7 g iron sulfate; the results show the reduction effectiveness.

|  | COD (mg/l) - plant I | | |
| --- | --- | --- | --- |
|  | Before | After | Reduction % |
| Sample 1 | 3500 | 75 | 97,80% |
| Sample 2 | 2500 | 425 | 83% |
| Sample 3 | 9250 | 462,5 | 95% |
| Sample 4 | 482,5 | 81,25 | 83,10% |
| Sample 5 | 1275 | 111,25 | 91,30% |

The following table illustrates instead the results of performing, according to the same methods, tests on samples derived from a different industrial surface: these tests too, show the effectiveness of the reduction process.

|  | COD (mg/l) - plant II | | |
| --- | --- | --- | --- |
|  | Before | After | Reduction % |
| Sample 1 | 11500 | 4500 | 60,80% |
| Sample 2 | 18750 | 2725 | 85,50% |
| Sample 3 | 8750 | 2325 | 73,40% |
| Sample 4 | 29125 | 3525 | 87,90% |
| Sample 5 | 7250 | 4162 | 42,60% |

Besides the measurement of COD, for the two series of samples illustrated above the reduction of surfactants (anionic and non-ionic) was also checked. As is known, surfactants are a category of compounds that reduce the surface tension of liquids, allowing an easier distribution thereof (for this reason they are also known as wetting agents); the water, in the case of aqueous solutions, is thus able to better penetrate in the cracks of the substrates or inside fabrics, increasing the capacity for removing and carrying the dirt and thus increasing the cleaning power of the solution itself. They are organic molecules constituted by a polar end (hydrophilic head), which has a high affinity for water, and an apolar chain (hydrophobic tail), which instead tends to bond with fatty dirt, emulsifying it and facilitating its dispersion in the washing water. Depending on the ionic charge of the molecule of the surfactant it is possible to have: anionic surfactants, non-ionic surfactants, cationic surfactants and amphoteric surfactants. The surfactants most suited to remove dirt are the anionic and non-ionic ones. The former tend to increase repulsion between the dirt and the surface, the latter have a greater emulsifying action.

These molecules are characterized by slow biodegradability in nature and therefore may cause environmental problems, although in recent years increasingly biodegradable molecules have been seen in use.

A method (which does not require particular equipment) has been used to measure non-ionic surfactants which consists in a direct titration of the non-ionic surfactants by tetrakis-(4-fluorophenyl) sodium borate 2-hydrate.

The following tables highlight the excellent results (in terms of reduction of non-ionic surfactants) achieved by performing the method according to the invention (with the concentrations of reagents proposed above).

|  | Non-ionic surfactants (mg/l) - plant I | | |
| --- | --- | --- | --- |
|  | Before | After | Reduction % |
| Sample 1 | 183 | 30,7 | 83,20% |
| Sample 2 | 58,9 | 15,4 | 73,80% |
| Sample 3 | 26,1 | 3,1 | 88,40% |
| Sample 4 | 0,77 | 0,2 | 67,50% |
| Sample 5 | 55,1 | 9 | 83,70% |

|  | Non-ionic surfactants (mg/l) - plant II | | |
| --- | --- | --- | --- |
|  | Before | After | Reduction % |
| Sample 1 | 197,4 | 53,8 | 72,70% |
| Sample 2 | 210 | 2.56 | 98,70% |
| Sample 3 | 261 | 2,82 | 98,90% |
| Sample 4 | 298,7 | 2,44 | 99,10% |
| Sample 5 | 157,7 | 1,8 | 98,80% |

Confirmation of the effectiveness of the described treatment is also highlighted by the tests carried out by measuring the concentrations of anionic surfactants on the same samples. It was decided to use the official APAT-IRSA method and more precisely number 5170 (MBAS: Methylene Blue Active Substances) for this parameter.

Anionic surfactants form with methylene blue (cationic dye) a blue salt, which is extracted quantitatively in chloroform. Many substances present in solution may cause interference (both positive and negative); by extracting the colored salt first by means of an alkaline solution of methylene blue followed by a treatment with an acid solution of the same reactive, the interference is reduced considerably. The absorbance of the chloroform phase is proportional to the concentration of the anionic surfactant and is measured, by spectrophotometry, at the wavelength of 650 nm.

In order to obtain the concentration of anionic surfactants present in the sample it is necessary to perform first a calibration curve, thanks to which it will then be possible to trace this parameter: the curve is illustrated in Figure 11. Moreover, a spectrophotometer adapted for transmittance readings at 650 nm, provided with small vessels of 1 cm (and more) and 100-ml separating funnels, preferably with cocks made of inert Teflon, was used.

The tables that show the results obtained and bear witness to the effectiveness of the reduction are given hereafter.

|  | Anionic surfactants (mg/l) - plant I | | |
|---|---|---|---|
|  | Before | After | Reduction % |
| Sample 1 | 22,6 | 1,35 | 94% |
| Sample 2 | 25,6 | 1,35 | 94,70% |
| Sample 3 | 1,58 | 0,26 | 83,80% |
| Sample 4 | 0,56 | 0,07 | 87,40% |
| Sample 5 | 1,72 | 0,2 | 88,30% |

|  | Anionic surfactants (mg/l) - plant II | | |
|---|---|---|---|
|  | Before | After | Reduction % |
| Sample 1 | 35 | 4,2 | 88% |
| Sample 2 | 16,5 | 0,22 | 98,70% |
| Sample 3 | 13,1 | 0,015 | 99,90% |
| Sample 4 | 19 | 0,07 | 99,60% |
| Sample 5 | 12,3 | 0,6 | 95,10% |

For the subsequent tests, for the sake of convenience it was decided to check only the COD, because it is highly representative of the pollutant load itself and certainly, among the various parameters, is the most efficient in giving a prompt idea of the extent of the reduction obtained with the method according to the invention.

The following table thus reports a set of measurements performed on solutions (diluted at 5%, apart from the Flerogum) that contained the individual components usually used in detergent formulations, indeed in order to verify the effectiveness of the reduction of COD by means of the described method.

| Tested solutions | Initial COD (Mg/l) | Final COD (Mg/l) | % reduction | Process effectiveness |
|---|---|---|---|---|
| 2% EDTA | 407,5 | 196,25 | 51,84% | Good |
| 3% Isopropyl alcohol | 8000 | 75 | 99,60% | Excellent |
| 2.5% Etilon M6 (commercial name of a non-ionic surfactant that comprises ethoxylated fatty alcohol) | 6625 | 360 | 94,57% | Excellent |
| 4% Flerogum K38 (reaction I) | 33728 | 3375 | 89,99% | Excellent |
| 4% Flerogum K38 (reaction I) | 3375 | 285 | 91.56% | Excellent |
| 5% Polyacrylic acid | 2012,5 | 170 | 91,55% | Excellent |

As one can note, in the case of Flerogum, it was decided to verify, with success, also the effectiveness of a second addition step c., as already illustrated in the previous pages.

The following pages, furthermore, report the result of some tests performed on commercially available detergents and/or detergents conceived by the Applicant, of which first of all a short description and their contents are reported hereafter.

- *BIO AOP-RIL*: newly formulated detergent, which contains only compounds that are easily degradable by the reaction that occurs in step c.. The chemical composition is: 71% decalcified water, 5% polyacrylic acid (SOKALAN 25 CL PN), 10% caustic potash, 3% sodium gluconate, 3% citric acid, 3% alkyl polyglycosides (GLUCOPON 650 EC), 5% fatty acids from coconut potassium soap (FLEROGUM K38, which is the commercial name of an anionic surfactant). The provision of this detergent entails weighing water and SOKALAN on a balance, then subjecting to mixing, then adding the remaining raw materials while mixing, FLEROGUM with a drum;
- *BIG FLUID*: detergent formulated for hand-washing and machine washing of delicate clothes, such as wool, silk, colored items and the like; it contains 20-25% non-ionic surfactants (ethoxylated fatty alcohols), 5% citric acid, <1% fragrance and whitening agents;
- *LUCE*: concentrated detergent for floors; it contains 5 - 10% non-ionic surfactants and anionic surfactants, EDTA, <1% ammonia, fragrance;
- *BRIN:* scented detergent with brightening effect for washing and maintenance of floors, coverings and painted surfaces. It may also be used on floors treated with wax both by hand and by using washing-drying machines. It contains < 5% anionic surfactants and non-ionic surfactants, EDTA, color and fragrance;
- *LILLY CLEAN:* neutral scented detergent suitable for daily washing of floors and of all washable surfaces (same composition as BRIN, but color and fragrance change);
- *DEORNET CLOR:* degreasing and sanitizing active chlorine detergent with deodorant effect. Particularly effective for cleaning floors and coverings, sanitary fixtures, faucets, trash cans and steel surfaces for kitchen, bathrooms, changing rooms, schools, hospitals; it contains < 2.5% sodium hydroxide, 2.5% sodium hypochlorite, < 5% sequestrants and non-ionic surfactants;
- *E'COMATIC:* alkaline concentrated detergent for industrial clothes washing, absolutely non-foaming; it contains 5% caustic soda, 10% non-ionic surfactants, 7-10% anionic surfactants, < 5% sequestrants;
- *KIMSOL:* innovative product, particularly adapted for washing all hard surfaces, floors, coverings, equipment, lacquered doors, aluminum doors and window frames and accessories. It has a wax removing effect at high concentrations. It may be used both for ordinary cleaning for maintenance and for strong washing, simply by varying the concentrations; use at low concentrations does not require rinsing. It contains < 5% anionic surfactants, < 1% EDTA and 10% glycols;
- *SHAR:* non-foaming neutral detergent for ordinary and daily maintenance of floors and of all washable surfaces. It can be used even on lacquered surfaces or surfaces treated with wax, does not leave residues and does not require rinsing. Same composition as BRIN, but fragrance and color change.

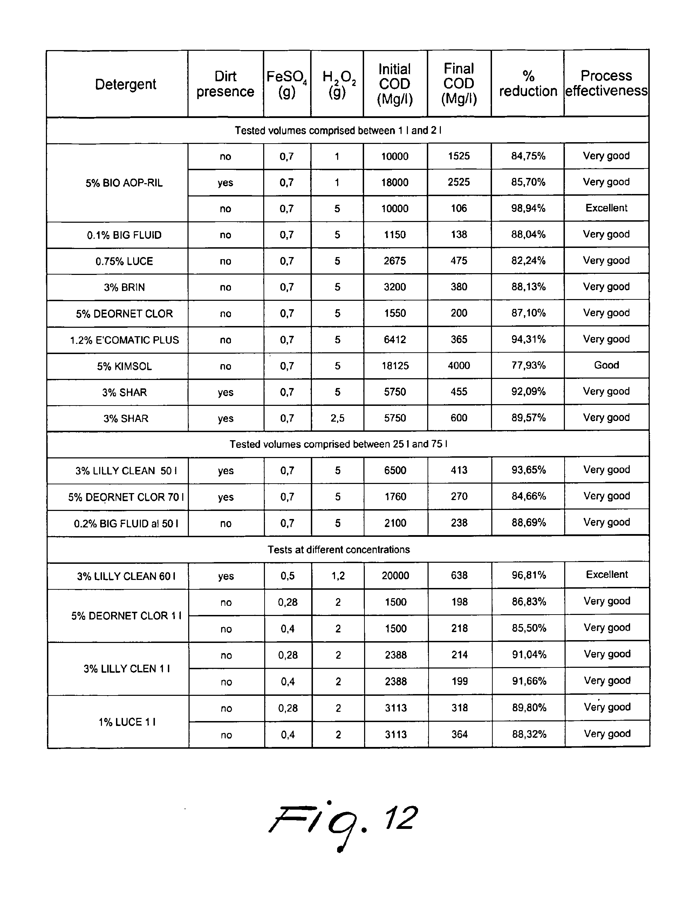

The table given in Figure 12 thus highlights the effectiveness of the method according to the invention, performed with different concentrations of the reagents on 100 ml of compound.

Finally, the following table shows the result of further tests performed in an approved analysis laboratory, before and after performing the method according to the invention on samples of wastewater provided by the Applicant. Again, the tests prove the effectiveness of the method in reducing the pollutant loads of washing wastewater.

| Parameter (mg/l) | Before | After | % reduction |
|---|---|---|---|
| Total suspended solids | 500,7 | 0,1 | 99,98% |
| COD | 1884 | 293 | 84,45% |
| BOD5 | 560 | 140 | 75,00% |
| Total phosphorus | 10,12 | 0,37 | 96,34% |
| Anionic surfactants | 46,25 | 0,99 | 97,86% |
| Non-ionic surfactants | 75,28 | 0,83 | 98,90% |

It is specified that the expression BOD5 designates biochemical oxygen demand after 5 days.

In practice it has been found that the method according to the invention fully achieves the intended aim, because it is possible to degrade washing wastewater effectively with modest costs thanks to the choice to send a predefined quantity of wastewater to an apparatus provided with a respective containment tank, then administering a first pH adjustment additive, and subsequently adding hydrogen peroxide and an iron salt, to induce the forming of hydroxyl radicals, then adding a second pH adjustment additive, in order to facilitate the spontaneous decomposition of the residual hydrogen peroxide and the precipitation of iron hydroxides, for a second degradation, and finally evacuating the containment tank, for the final disposal of the predefined quantity of wastewater, substantially degraded.

The invention thus conceived is susceptible of numerous modifications and variations, all of which are within the scope of the appended claims; all the details may further be replaced with other technically equivalent elements.

In the examples of embodiment shown, individual characteristics, given in relation to specific examples, may actually be interchanged with other different characteristics that exist in other examples of embodiment.

Moreover, it is noted that anything found to be already known during the patenting process is understood not to be claimed and to be the subject of a disclaimer.

In practice, the materials used, as well as the dimensions, may be any according to requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for the degradation of industrial wastewater, which consists in:

   a. sending a predefined quantity of wastewater to an apparatus (1) provided with a corresponding containment tank (2);

   b. administering to said predefined quantity of wastewater a first additive for adjusting the pH value, in order to bring it to a first predefined value;

   c. adding to said predefined quantity of wastewater, once said first predefined pH value has been reached, hydrogen peroxide and an iron salt, in order to induce the forming of hydroxyl radicals, suitable for the advanced oxidation of substances of various types present in said predefined quantity of wastewater, for an at least partial first degradation thereof;

   d. adding to said predefined quantity of wastewater a second additive for adjusting the pH value, in order to bring it to a second predefined value, adapted to facilitate the spontaneous decomposition of the residual hydrogen peroxide and the precipitation of iron hydroxides, for a second degradation of the remaining substances of various types present in said predefined quantity of wastewater;

   e. evacuating said containment tank (2), for the final disposal of said predefined quantity of wastewater, substantially degraded.

2. The method according to claim 1, **characterized in that** said hydrogen peroxide is 50% diluted in distilled water, percentage referred to the total weight, said step c. consisting in adding hydrogen peroxide diluted in a quantity comprised between 0.1 ml and 10 ml for every 100 ml of treated wastewater, and preferably in a quantity comprised between 1 ml and 5 ml for every 100 ml of treated wastewater.

3. The method according to claim 1, **characterized in that** said iron salt is chosen among iron sulfate, ferrous chloride and iron hydroxide and preferably is constituted by iron sulfate.

4. The method according to one or more of the preceding claims, **characterized in that** said step c. consists in adding iron sulfate in a quantity comprised between 0.1 g and 5 g, for every 100 ml of treated wastewater, and preferably in a quantity equal to 0.7 g for every 100 ml of treated wastewater.

5. The method according to one or more of the preceding claims, **characterized in that** said first additive comprises a mixture of caustic soda and sulfuric acid, said first predefined pH value being comprised between 3 and 5 and preferably equal to 4.

6. The method according to one or more of the preceding claims, **characterized in that** said second additive is substantially constituted by caustic soda, said second predefined pH value being comprised between 8 and 9.

7. The method according to one or more of the preceding claims, **characterized in that** it comprises a treatment c1. of further degradation of said predefined quantity of wastewater, said treatment c1 being chosen preferably among:

a further addition step c., the use of hydrogen peroxide, an ozonization treatment, a low-frequency ultrasonic treatment, a treatment based on ultraviolet radiation, a combination of two or more of the above.

8. The method according to one or more of the preceding claims, **characterized in that** it comprises, after said sending step a. and before said administration step b., a step f. of first coarse filtration of said predefined quantity of wastewater, in order to remove at least partially any coarse materials that might be present in suspension in said predefined quantity of wastewater.

9. The method according to one or more of the preceding claims, **characterized in that** it comprises, after said addition step d. and before said evacuation step e., a step g. of second fine filtration of said predefined quantity of wastewater, in order to remove any solid-state materials that might have formed in said containment tank (2).

10. The method according to one or more of the preceding claims, **characterized in that** it comprises, after said evacuation step e., a step h. for collecting the substantially degraded wastewater for its reuse in the industrial field.

11. An apparatus for performing the method according to claim 1, **characterized in that** it comprises at least one supply duct (3), which leads to said containment tank (2), and a first pump (4), associated with said duct (3), to send industrial wastewater to be degraded to said containment tank (2), said containment tank (2) being provided with means (5) for controlled dispensing of said first additive for adjusting the pH of the wastewater, of hydrogen peroxide and of an iron salt, to induce the forming of hydroxyl radicals, and of said second pH adjustment additive.

12. The apparatus according to claim 11, **characterized in that** it comprises a first filter (6) for the wastewater, preferably of the bag filter type with porosity comprised between 25 $\mu$m and 50 $\mu$m, arranged along said supply duct (3) that controls the flow of wastewater, in order to perform said step f. of first coarse filtration.

13. The apparatus according to claims 11 and 12, **characterized in that** it comprises a second filter for wastewater, preferably of the filter press type, arranged in a chamber (9) provided substantially below said containment tank (2) and connected thereto, in order to perform said step g. of second fine filtration of said predefined quantity of wastewater.

14. The apparatus according to claims 11 and 12 and as an alternative to claim 13, **characterized in that** it comprises a second filter for wastewater, preferably of the type of a paper roll filter (11), arranged downstream of a chamber (9) provided substantially below said containment tank (2) and connected thereto, in order to perform said step g. of second fine filtration of said predefined quantity of wastewater, collected on the bottom (2a) of said containment tank (2).

15. The apparatus according to one or more of the preceding claims, **characterized in that** it comprises a container for collecting any solid-state materials that might have formed in said containment tank (2) and separated from the wastewater during said step g. of second fine filtration, said chamber (9) leading to a collection tank (12) of the wastewater substantially degraded and without the solid-state materials, in order to perform said collecting step h. and its reuse in the industrial field.

SENDING WASTEWATER — *a*

FIRST FILTRATION — *f*

FIRST ADDITIVE ADMINISTRATION — *b*

ADDITION OF HYDROGEN PEROXIDE AND IRON SALT — *c*

DEGRADATION — *c1*

ADDITION OF SECOND ADDITIVE — *d*

SECOND FILTRATION — *g*

EVACUATION — *e*

COLLECTING DEGRADED WASTEWATER — *h*

*Fig. 1*

*Fig.2*

EP 2 500 323 A1

Fig. 3

Fig. 4

Fig. 5

*Fig. 6*

*Fig. 7*

11

Fig.8

11

Fig.9

Fig. 10

MBAS ANIONIC CALIBRATION CURVE

$$y = 15,051x$$
$$R^2 = 0,987$$

Abs

Fig. 11

| Detergent | Dirt presence | FeSO$_4$ (g) | H$_2$O$_2$ (g) | Initial COD (Mg/l) | Final COD (Mg/l) | % reduction | Process effectiveness |
|---|---|---|---|---|---|---|---|
| Tested volumes comprised between 1 l and 2 l | | | | | | | |
| 5% BIO AOP-RIL | no | 0,7 | 1 | 10000 | 1525 | 84,75% | Very good |
| | yes | 0,7 | 1 | 18000 | 2525 | 85,70% | Very good |
| | no | 0,7 | 5 | 10000 | 106 | 98,94% | Excellent |
| 0.1% BIG FLUID | no | 0,7 | 5 | 1150 | 138 | 88,04% | Very good |
| 0.75% LUCE | no | 0,7 | 5 | 2675 | 475 | 82,24% | Very good |
| 3% BRIN | no | 0,7 | 5 | 3200 | 380 | 88,13% | Very good |
| 5% DEORNET CLOR | no | 0,7 | 5 | 1550 | 200 | 87,10% | Very good |
| 1.2% E'COMATIC PLUS | no | 0,7 | 5 | 6412 | 365 | 94,31% | Very good |
| 5% KIMSOL | no | 0,7 | 5 | 18125 | 4000 | 77,93% | Good |
| 3% SHAR | yes | 0,7 | 5 | 5750 | 455 | 92,09% | Very good |
| 3% SHAR | yes | 0,7 | 2,5 | 5750 | 600 | 89,57% | Very good |
| Tested volumes comprised between 25 l and 75 l | | | | | | | |
| 3% LILLY CLEAN 50 l | yes | 0,7 | 5 | 6500 | 413 | 93,65% | Very good |
| 5% DEORNET CLOR 70 l | yes | 0,7 | 5 | 1760 | 270 | 84,66% | Very good |
| 0.2% BIG FLUID al 50 l | no | 0,7 | 5 | 2100 | 238 | 88,69% | Very good |
| Tests at different concentrations | | | | | | | |
| 3% LILLY CLEAN 60 l | yes | 0,5 | 1,2 | 20000 | 638 | 96,81% | Excellent |
| 5% DEORNET CLOR 1 l | no | 0,28 | 2 | 1500 | 198 | 86,83% | Very good |
| | no | 0,4 | 2 | 1500 | 218 | 85,50% | Very good |
| 3% LILLY CLEN 1 l | no | 0,28 | 2 | 2388 | 214 | 91,04% | Very good |
| | no | 0,4 | 2 | 2388 | 199 | 91,66% | Very good |
| 1% LUCE 1 l | no | 0,28 | 2 | 3113 | 318 | 89,80% | Very good |
| | no | 0,4 | 2 | 3113 | 364 | 88,32% | Very good |

*Fig. 12*

## EUROPEAN SEARCH REPORT

Application Number

EP 11 42 5062

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 404 276 A1 (BOEING CO [US]) 27 December 1990 (1990-12-27) * column 1, line 3 - line 9 * * column 2, line 26 - line 50 * * column 4, line 20 - column 6, line 12 * | 1-6, 10-13,15 | INV. C02F1/72 ADD. C02F101/30 |
| X | FR 2 824 549 A1 (STENGEL PATRICE [FR]) 15 November 2002 (2002-11-15) * claim 1 * * page 3, line 26 - line 31 * | 1,3,6, 9-12,14, 15 | |
| X | US 2005/274678 A1 (CHEN HUNG-TA [TW] ET AL) 15 December 2005 (2005-12-15) * paragraph [0040] - paragraph [0059] * | 1,3,6, 10-12,15 | |
| X | EP 1 647 529 A1 (FMC FORET S A [ES]) 19 April 2006 (2006-04-19) * paragraph [0035] - paragraph [0058] * | 1,6, 9-12,14, 15 | |
| X | EP 1 234 802 A1 (HASHIZUME KAZUTO [JP]) 28 August 2002 (2002-08-28) * paragraph [0029] - paragraph [0051] * | 1,5-12, 14,15 | TECHNICAL FIELDS SEARCHED (IPC) C02F |
| X | JP 4 074593 A (FUJI PHOTO FILM CO LTD) 9 March 1992 (1992-03-09) * abstract * | 1,5,6, 8-10 | |
| X | WO 02/04360 A1 (MICROBAR SYSTEMS INC [US] MICROBAR INC [US]) 17 January 2002 (2002-01-17) * figure 1 * | 11,12, 14,15 | |

The present search report has been drawn up for all claims

| Place of search | Date of completion of the search | Examiner |
|---|---|---|
| The Hague | 17 August 2011 | Janssens, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 42 5062

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2011

| Patent document cited in search report | | Publication date | Patent family member(s) | | Publication date |
|---|---|---|---|---|---|
| EP 0404276 | A1 | 27-12-1990 | NONE | | |
| FR 2824549 | A1 | 15-11-2002 | NONE | | |
| US 2005274678 | A1 | 15-12-2005 | NONE | | |
| EP 1647529 | A1 | 19-04-2006 | AU | 2003260523 A1 | 10-03-2005 |
| | | | CA | 2536302 A1 | 03-03-2005 |
| | | | CN | 1819974 A | 16-08-2006 |
| | | | WO | 2005019118 A1 | 03-03-2005 |
| | | | JP | 2007514515 A | 07-06-2007 |
| | | | MX | PA06002078 A | 31-08-2006 |
| | | | US | 2008035583 A1 | 14-02-2008 |
| EP 1234802 | A1 | 28-08-2002 | AU | 6367099 A | 08-05-2001 |
| | | | AU | 7963200 A | 08-05-2001 |
| | | | CA | 2356976 A1 | 03-05-2001 |
| | | | WO | 0130706 A1 | 03-05-2001 |
| | | | WO | 0130704 A1 | 03-05-2001 |
| | | | JP | 4259797 B2 | 30-04-2009 |
| | | | US | 6773609 B1 | 10-08-2004 |
| JP 4074593 | A | 09-03-1992 | NONE | | |
| WO 0204360 | A1 | 17-01-2002 | AU | 7929201 A | 21-01-2002 |

EPO FORM P0459

For more details about this annex : see Official Journal of the European Patent Office, No. 12/82